# EUROPÄISCHE PATENTSCHRIFT

(11) **EP 2 850 401 B1**
(45) Veröffentlichungstag und Bekanntmachung des Hinweises auf die Patenterteilung: **16.11.2022**
(21) Anmeldenummer: 13723399.5
(22) Anmeldetag: 15.05.2013
(51) Int. Cl.: G01G 19/02, G08G 1/02, G08G 1/052

(54) **SENSORMODUL EINES WIM-SYSTEMS UND MESSVERFAHREN**
SENSOR MODULE OF A WIM SYSTEM AND MEASUREMENT METHOD
MODULE CAPTEUR D'UN SYSTÈME WIM ET PROCÉDÉ DE MESURE

(30) Priorität: 16.05.2012 CH 697122012
(43) Veröffentlichungstag der Anmeldung: 25.03.2015
(73) Patentinhaber: Kistler Holding AG, 8408 Winterthur (CH)
(72) Erfinder: CORNU, David, CH-6500 Bellinzona (CH); HOFMANN, Adrian, CH-8464 Ellikon am Rhein (CH)
(86) Internationale Anmeldenummer: PCT/CH2013/000083
(87) Internationale Veröffentlichungsnummer: WO 2013/170394

(56) Entgegenhaltungen:
- WO-A1-02/23504
- FR-A1- 2 956 511
- US-B1- 7 136 828
- US-B2- 6 853 885

## Beschreibung

### Technisches Gebiet

Die vorliegende Erfindung betrifft ein Sensormodul zur Messung der Achsgeschwindigkeiten und -gewichte von zweispurigen Fahrzeugen, umfassend eine Mehrzahl von piezoelektrischen Streifensensoren, sowie ein Verfahren zur dynamischen Gewichtsmessung von Fahrzeugen bei der Fahrt auf einer Fahrbahn, wobei ein WIM-System (Weigh-In-Motion-System) umfassend eine Mehrzahl von Streifensensoren verwendet wird.

### Stand der Technik

Die dynamische Gewichtsmessung von Fahrzeugen im Strassenverkehr auf Fahrbahnen während der Bewegung, wird mit WIM-Systemen (Weigh-In-Motion) bestimmt.

Bekannte WIM-Systeme basierend auf sogenannten Streifensensoren, welche voneinander in Fahrbahnlängsrichtung um einige Meter beabstandet angeordnet sind. Die streifenartigen und flachen Streifensensoren sind piezoelektrisch ausgeführt und werden einzeln mit geringer Einbautiefe in die Fahrbahnoberfläche eingelassen und dort fixiert. Die Sensorbreite in Fahrtrichtung ist üblicherweise in der Grössenordnung von einigen Zentimetern ausgestaltet, weshalb nicht die komplette Radkontaktfläche auswertbar ist. Durch den piezoelektrischen Effekt ist die Detektion von Spannungssignalen sehr einfach. Erfasste piezoelektrische Signale sind in Kraftsignale umrechenbar, wobei die Kosten für die Streifensensoren äusserst niedrig sind. Über Signalleitungen sind die Streifensensoren mit einer Signalerfassungselektronik verbunden, welche die Messsignale an eine Auswerteeinheit weiterleiten kann.

Es existieren unterschiedliche Layouts für die Sensoranordnung, ein sogenanntes volles Layout (FULL, Fig. 4a) beispielsweise gemäss US2011/0127090 und ein versetztes Layout (STAGGERED, Fig. 4b) gemäss WO02/23504. Dokument WO02/23504 wird als der nächste Stand der Technik gegenüber den unabhängigen Ansprüchen angesehen. Dieses offenbart nicht, dass das Sensormodul zur Messung der Achsgewichte von zweispurigen Fahrzeugen angepasst ist und auch nicht, dass die ersten Streifensensoren jeder Spurgruppe und die zweiten Streifensensoren jeder Spurgruppe in Fahrtrichtung um einen Versatz von zwischen 1 cm und 15 cm voneinander angeordnet sind und dass das Sensormodul eine Modullänge von weniger als 80cm aufweist.

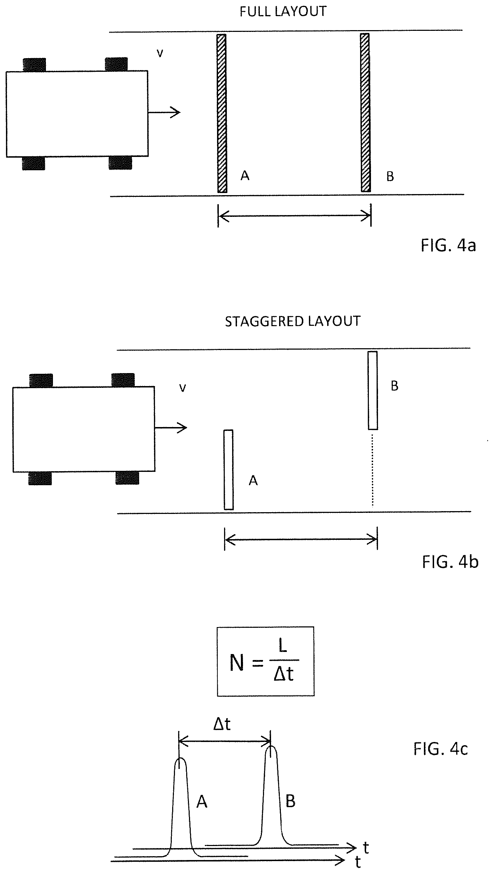

Während der Fahrzeugüberfahrt werden Messsignale zeitlich aufgelöst erfasst, aus welchen man auf die aktuelle Fahrzeuggeschwindigkeit schliessen kann. Wenn Fahrzeugräder zeitlich versetzt über zwei Sensoren abrollen, können zwei Messsignale aufgrund der Achslast, eines vom ersten Sensor und ein späteres vom in Fahrtrichtung verlagerten Sensor, erfasst werden. Die Achsgeschwindigkeit kann aus dem Abstand zwischen den zwei Sensoren, dividiert durch den gemessenen Zeitversatz zwischen den Signalen beider Sensoren, dargestellt in Fig. 4c, ermittelt werden. Um aus den Sensorsignalen die Achslasten zu berechnen, müssen die Sensorsignale aufintegriert werden und mit der Fahrzeuggeschwindigkeit und einer Kalibrierkonstante multipliziert werden. Dies ist für WIM-Systeme notwendig, welche dünn ausgeführte Streifensensoren umfassen, bei denen die Radfläche nicht vollständig auf dem Streifensensor aufliegt. Eine Möglichkeit zur Charakterisierung und Identifikation von Fahrzeugen ist aus FR2956511A1 bekannt, in welcher Streifensensoren in einem Winkel kleiner 90° zur Fahrrichtung angeordnet sind. Mit diesen Sensoren kann der Radstand eines Fahrzeuges und die die Geschwindigkeit ermittelt werden.

Die Schrift US6853885B12 offenbart ebenfalls Streifensensoren, welche voneinander in Fahrrichtung beabstandet und parallel zueinander unter einem Winkel schräg zur Fahrrichtung angeordnet sind und bei welchen eindeutige charakteristische Punkte des Sensorsignals als Referenzpunkte für eine Zeitmessung der Überfahrt des Fahrzeuges zur Bestimmung der Fahrzeuggeschwindigkeit verwendet werden.

Ein System zur Fahrzeugcharakterisierung ist ebenso aus US7136828B1 bekannt, wo charakteristische Werte für ein Fahrzeug durch in der Fahrbahn angeordnete Induktionsschlaufen zur Fahrzeugcharakterisierung aufgezeichnet werden und durch weitere in der Fahrbahn angeordete Induktionsschlaufen zur Fahrzeugidentifikation ein ordnungsgemässes Einreihen überprüft wird.

Für genaue Gewichtsmessungen mittels Streifensensoren, welche keine direkte Gewichtsdetektion erlauben, ist darum zwingend erforderlich, dass die Messung der Geschwindigkeiten sehr genau geschieht.

Die bekannten Sensoranordnungen sind aber für Applikationen, bei welchen sich die Geschwindigkeit des Fahrzeuges wahrend der Überfahrt über das WIM-System ändert, nachteilig, da die Genauigkeit der Gewichtsbestimmung stark beeinträchtigt ist. Das ist insbesondere der Fall für Applikationen im Bereich Maut, Kontrollstationen und weitere, wo präzise kalibrierte Gewichtmessungen nötig oder gewünscht sind und die Fahrzeuge langsam, mit unregelmässiger Geschwindigkeit oder sogar im "Stop&Go"-Verkehr über die WIM-Systeme fahren.

### Darstellung der Erfindung

Die vorliegende Erfindung hat sich zur Aufgabe gestellt, eine Sensoranordnung eines WIM-Systems mit Streifensensoren zu schaffen, welche eine verbesserte Geschwindigkeitsmessung bei variablen Überfahrtsgeschwindigkeiten erlaubt, wobei das Auftreten von Messfehlern verringert und die Quote erfolgreicher Geschwindigkeitsmessungen vor allem bei "Stop&Go"-Verkehr gesteigert ist.

Die Aufgabe wird mit einem Sensormodul mit den Merkmalen des Patentanspruchs 1 gelöst. Um die Aufgabe zu lösen wird ein Sensormodul zur Messung der Achsgeschwindigkeiten von zweispurigen Fahrzeugen, umfassend eine Mehrzahl von piezoelektrischen Streifensensoren eingesetzt, wobei mindestens vier Streifensensoren in mindestens zwei Spurgruppen quer relativ zur Fahrtrichtung und beabstandet zueinander angeordnet sind, sodass jeweils eine Achsgeschwindigkeit jeder Achse eines überfahrenden Fahrzeuges messbar ist.

Alle Streifensensoren (A, B, C, D) sind dabei orthogonal zur Fahrtrichtung angeordnet, wobei erste Streifensensoren (A, D) zueinander in Fahrtrichtung (L) des Sensormoduls (1) durch einen festen Längsversatz (LAD), der grösser als die maximale Radkontaktlänge ist, voneinander beabstandet angeordnet sind und eine erste Spurgruppe (I) bilden. Eine Radkontaktlänge kann etwa 20 cm erreichen, je nach Fahrzeugart. Zweite Streifensensoren (B, C) zueinander in Fahrtrichtung (L) des Sensormoduls (1) sind durch einen festen Längsversatz (LBC), der ebenfalls grösser als die maximale Radkontaktlänge ist, voneinander beabstandet angeordnet und bilden eine zweite Spurgruppe (II). Die Streifensensoren (A, D) der ersten Spurgruppe (I) quer zur Fahrtrichtung (Q) sind versetzt zu den Streifensensoren (B, C) der zweiten Spurgruppe (II) angeordnet, sodass jede Spurgruppe (I, II) eine Spur der Fahrbahn abdeckt. Erfindungsgemäss weisen die ersten Streifensensoren (A, B) jeder Spurgruppe (I, II) in Fahrtrichtung (L) einen Versatz (LAB) von zwischen 1 cm und 15 cm voneinander auf, und die zweiten Streifensensoren (C, D) jeder Spurgruppe (I, II) in Fahrtrichtung (L) weisen ebenfalls einen Versatz (LCD) von zwischen 1 cm und 15 cm voneinander auf. Zudem weist das Sensormodul 1 eine Modullänge (LABCD) in Fahrtrichtung von weniger als 80cm auf.

Auf diese Art der Anordnung ist einerseits gewährleistet, dass die Signale möglichst nicht gleichzeitig audtret4enn, wegen der Längsversatze der einzelnen Streifensensoren. Andererseits, weil die Gesamtmodullänge mit höchstens 80 cm. kürzer ist als der Radstand eines typischen zweispurigen Fahrzeuges, ist gewährleistet, dass die erste Achse das Sensormodul vollständig überfahren hat, bevor die zweite Achse auf das Sensormodul auffährt. Da alle Sensoren in Längsrichtung zueinander einen Versatz aufweisen, lassen sich durch die zeitversetzt erfassten Signale, bei bekannten Abständen der Streifensensoren, die Geschwindigkeiten der Achsen mit hoher Genauigkeit bestimmen. Da sich durch mindestens vier Streifensensoren pro Achse auch vier Zeitsignale erfassen lassen, ergeben sich sechs Kombinationsmöglichkeiten zum Bestimmen der Überfahrgeschwindigkeit. Selbst wenn demnach nicht alle Messungen erfolgreich verlaufen, beispielsweise wegen eines Stop-and-go Fahrverhaltens, so müssen nur zwei der vier Messungen braucbar sein, um die Geschwindigkeit und somit die Lasten doch noch bestimmen zu können.

### Kurze Beschreibung der Zeichnungen

Ausführungsbeispiele möglicher Sensormodule und damit entsprechende Messanordnungen und das Messverfahren werden nachstehend im Zusammenhang mit den anliegenden Zeichnungen beschrieben.
- Figur 1a: zeigt eine schematische Aufsicht auf ein, in eine Fahrbahn eingelassenes ersters Sensormodul, während
- Figur 1b: eine schematische Aufsicht auf ein abgewandeltes Sensormodul in eine Fahrbahn eingelassen zeigt.
- Figur 2: zeigt eine schematische Aufsicht auf das Sensormodul gemäss Figur 1b, wobei die Sensoranordnung in einer Rahmenkonstruktion dargestellt ist.
- Figur 3: zeigt eine perspektivische schematische Ansicht der Überfahrt eines Fahrzeugs über eine Sensoranordnung mit Rahmenkonstruktion gemäss Figur 2, wobei zwei Rahmenkonstruktionen optional vorgesehen sind.
- Figur 4: zeigt den bekannten Stand der Technik von Sensoranordnungen umfassend Streifensensoren in WIM-Systemen in einer schematischen Darstellung.

### Beschreibung

Ein hier beschriebenes WIM-System (Weigh-In Motion), umfasst ein Sensormodul 1, welches in eine Fahrbahnoberfläche 2 einer Strasse eingelassen ist und welches von einem Fahrzeug 3 überfahrbar ist. Die Fahrtrichtung des Fahrzeuges 3 ist hier mit einem ausgefüllten Pfeil angedeutet. Das Fahrzeug weist eine erste Spur 33 und eine in Querrichtung beabstandete zweite Spur 34 auf. In Fahrtrichtung überfährt das Fahrzeug 3 das Sensormodul 1 mit einer ersten Achse 31 und anschliessend mit einer zweiten Achse 32. Jede Achse 31, 32 weist hier jeweils zwei Fahrzeugräder 30 auf, welche je nach Art des Fahrzeuges 3 unterschiedliche Radkontaktflächen aufweisen. Aus Versuchsreihen mit unterschiedlichen Fahrzeugen 3, unterschiedlicher Beladung, Reifendruck und Art der Fahrzeugräder 30 ging hervor, dass eine Radkontaktlänge 300 maximal 20cm beträgt.

Das Sensormodul 1 erstreckt sich in einer Fahrtrichtung L und einer Modulquerrichtung Q und weist eine Mehrzahl von piezoelektrischen Streifensensoren A, B, C, D auf, die alle orthogonal zur Fahrtrichtung angeordnet sind. Die beispielsweise vier Streifensensoren A, B, C und D werden derart angeordnet, dass die Sensoren bei installiertem Sensormodul 1 in einer Fahrbahnoberfläche, wenige Millimetern tief liegend gelagert sind und das Sensormodul 1 eine möglichst plane Berührungsfläche für Fahrzeugräder bietet. Die Streifensensoren weisen Sensorflächen S, S' auf. Wenn im Folgenden von einer relativen Verschiebung der Sensorflächen S, S' die Rede ist, ist damit eine Verschiebung der Sensorflächenmitten in Fahrtrichtung L oder Modulquerrichtung Q gemeint.

Ein erster Streifensensor A und ein zweiter Streifensensor D einer ersten Spurgruppe I sind in Fahrtrichtung L mit einem Längsversatz LAD unlösbar zueinander fixiert angeordnet. Dieser Längsversatz LAD ist grösser oder gleich der maximal auftretenden Radkontaktlänge 300 ausgeführt und damit grösser oder gleich 20 cm ausgeführt, sodass bei der Überfahrt zwei voneinander zeitlich getrennte Messsignale am ersten Streifensensor A und am zweiten Streifensensor D detektierbar sind.

Quer zur Fahrtrichtung Q von den Streifensensoren A, D der ersten Spurgruppe I, sind ein erster Streifensensor B und ein zweiter Streifensensor C, in einem festen Längsversatz LBC relativ zueinander in Fahrtrichtung L unlösbar zueinander fixiert angeordnet: Auch hier muss der Längsversatz LBC mindestens 20cm oder mehr betragen, damit die Streifensensor B, C der zweiten Spurgruppe II zwei voneinander zeitlich getrennte Messsignale liefern. Die Streifensensoren A, B, C, D jeder Spurgruppe I, II sind in Querrichtung jeweils überlappungsfrei zueinander befestigt, damit reproduzierbare Messkurven von jedem Streifensensor störungsfrei aufgenommen werden können.

Die relative Positionierung der Streifensensoren der ersten Spurgruppe I und der zweiten Spurgruppe II, ist derart ausgestaltet, dass der Abstand LAB zwischen den ersten Streifensensoren A, B und der Abstand LCD zwischen den zweiten Streifensensoren C, D der unterschiedlichen Spurgruppen in Fahrtrichtung L grösser als 1cm und kleiner als 15 cm, bevorzugt grösser als 1cm und kleiner als 8cm ist. Die Abstände der Streifensensoren A, B, C, D in Fahrtrichtung L werden jeweils von den Streifensensormitten gemessen und bestimmt. Die Streifensensoren der ersten und der zweiten Spurgruppe I, II sollten parallel zueinander angeordnet sein.

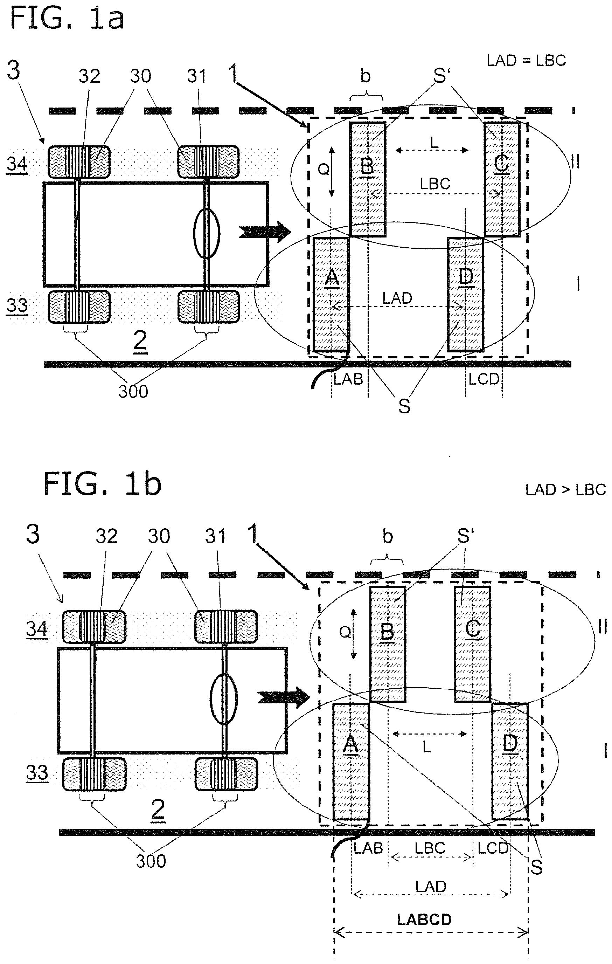

Das in Figur 1a gezeigte Sensormodul 1 zeigt eine Sensoranordnung, wobei der Längsversatz LAD und der Längsversatz LBC der beiden Spurgruppen I, II identisch sind. Ist eine solche Sensoranordnung gewählt, muss gewährleistet sein, dass sich die Sensorfläche S' des ersten Sensors B der zweiten Spurgruppe II nicht mit der Sensorfläche S, des quer zur Fahrtrichtung, in Richtung Q verschobenen zweiten Sensors D überschneidet. Entsprechend muss der Abstand LBD grösser als 1 cm gewählt sein. Überfährt ein Fahrzeug 3 das Sensormodul 1 in Fahrtrichtung L, werden Messsignale von den Sensoren in der Reihenfolge A, B, D, C aufgenommen. Damit der erste Streifensensor B der zweiten Spurgruppe II in Fahrtrichtung L nicht mit dem zweite Streifensensor D der ersten Spurgruppe I überlappt, muss der Längsversatz zwischen Sensoren der ersten Spurgruppe I LAD grösser als der Abstand LAB zwischen den ersten Streifensensoren A, B sein.

Vorzugsweise sind der erste Sensor A der ersten Spurgruppe I und der erste Sensor B der zweiten Spurgruppe II quer zur Fahrtrichtung Q auf Stoss zueinander angeordnet. Dasselbe gilt für die zweiten Sensoren C und D.

In Figur 1b ist ein weiteres Sensormodul 1 gezeigt, wobei der Längsversatz LAD der ersten Spurgruppe I grösser als der Längsversatz LBC der zweiten Spurgruppe II ausgeführt ist. Die so definierten relativen Abstände der Sensoren zueinander sind bei der Auswertung der Messsignale entsprechend zu berücksichtigen. Überfährt ein Fahrzeug 3 das Sensormodul 1 in Fahrtrichtung L, werden Messsignale von den Sensoren in der Reihenfolge A, B, C, D aufgenommen.

### Vorgang Überfahrt und Messung

Anhand der definierten Abstände LAB, LCD und LBD, sowie der Längsversatze LAD und LBC, können sechs Zeitdifferenzen der aufgenommenen Messsignale bestimmt und ausgewertet werden. Es wird dabei jeweils ein Pegel (in der Regel ein Spannungssignal) gemessen, der sich bei der Überfahrt zeitlich verändert. Zur Bestimmung der Zeitdifferenzen Δt werden die jeweils maximalen Pegelwerte und die zugehörigen ermittelten Zeiten zueinander in Beziehung gesetzt.

Jeder Streifensensor A, B, C, D jeder Spurgruppe I, II wird zeitlich versetzt überquert, sodass jedes Fahrzeugrad 30 jeweils mindestens zwei Streifensensoren A, B, C, D überfährt, von welchen Messkurven aufgenommen werden können. Aufgrund der in Fahrtrichtung L verschobenen Anordnung der Streifensensoren können nach der Überfahrt einer Achse bis zu sechs Zeitdifferenzen aus den Messsignalen bestimmt werden (ΔtAB, ΔtAC, ΔtAD, AtBC, ΔtBD, ΔtCD). Aus den Zeitdifferenzen und den aufgenommenen Messpegeln und der bekannten Abstände und Versatze der Streifensensoren können die Achsgeschwindigkeiten und entsprechend auch die Achsgewichte mehrfach bestimmt werden. Damit sind verbesserte Aussagen über die Geschwindigkeiten und Massen der überfahrenden Fahrzeuge 3 bestimmbar.

Sollte das Fahrzeug im "Stop&Go"-Verkehr auf einem der Streifensensoren zum Stillstand kommen, bleiben ausreichend viele Messwerte, um eine Bestimmung der Geschwindigkeit und damit des Achsgewichtes zu gewährleisten.

Wichtig in diesem Zusammenhang ist allerdings, dass die Streifensensoren nicht zu weit voneinander entfernt sind, da solche Geschwindigkeitsmessungen dadurch ungenau werden. Sie müssen mindestens so weit voneinander entfernt sein, damit gewährleistet sein kann, dass dasselbe Rad jeweils nicht auf zwei Streifensensoren A und D oder B und C gleichzeitig sein können. Je länger die Distanz LAD resp. LBC allerdings ist, desto ungenauer werden wieder die Geschwindigkeitsmessungen. Daher ist in der erfindungsgemässen Streifensensoranordnung die Gesamtlänge Modullänge LABCD, die in Fahrtrichtung gemessen alle Sensoren A, B, C und D vollständig umfassen, kleiner als 80cm. Durch eine kompakte Anordnung ist auch gewährleistet, dass die Streifensensoren in einem Modul kompakt hergestellt und verbaut werden können.

In diesem Zusammenhang ist auch wichtig, dass alle Streifensensoren A, B, C und D jeweils quer, das heisst orthogonal zur Fahrtrichtung angeordnet sind, wie in den Figuren dargestellt.

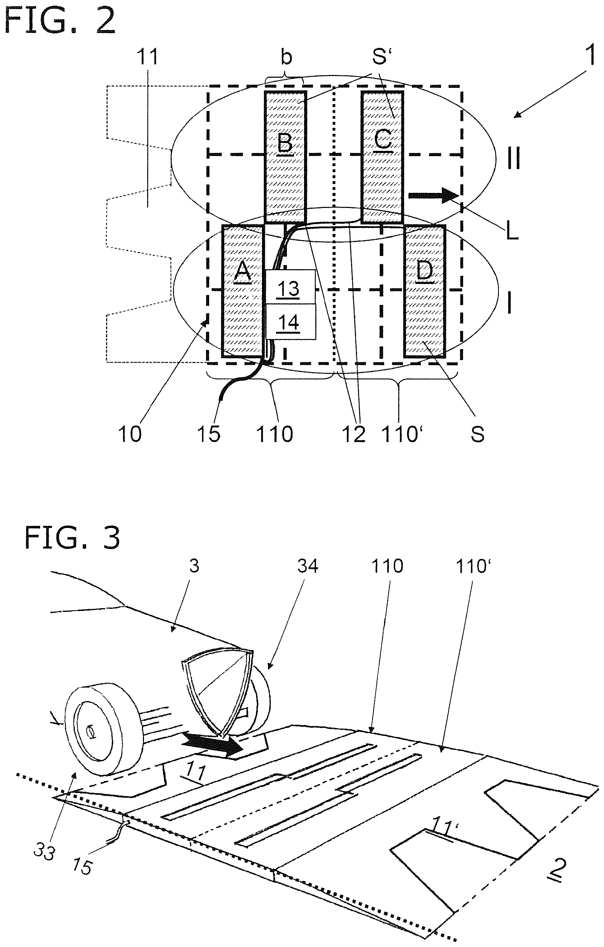

In Figur 2 ist ein Sensormodul 1 gezeigt, welches eine Rahmenkonstruktion 10 aufweist, welche die Streifensensoren A, B, C, D in festen definierten Abständen und Versatzen zueinander, wie oben beschrieben, hält. Damit sind die Streifensensoren A, B, C, D der ersten Spurgruppe I und der zweiten Spurgruppe II mit festen Abständen zueinander montiert.

Aus dem Sensormodul 1 heraus ist eine Ausgangsleitung 15 geführt, welche extern zum Abgriff der Messwerte bzw. der ausgewerteten Daten verwendbar ist und die Messwerte gebündelt weiterleitet. Mittels Signalleitungen 12 aller Streifensensoren A, B, C, D können Messsignale in eine Signalerfassungselektronik 13 geführt werden, welche innerhalb der Rahmenkonstruktion 10 angeordnet sein kann. Auch eine Auswerteeinheit 14 ist hier in der Rahmenkonstruktion 10 angeordnet, in welche aufgenommene Messsignale aus der Signalerfassungselektronik 13 direkt geführt werden können. Eine Anordnung der Signalerfassungselektronik 13 und der Auswerteeinheit 14 innerhalb der Rahmenkonstruktion 10 ist vorteilhaft, da die Sensorsignale direkt vor Ort verstärkt, detektiert und weiterverarbeitet werden können. Wahlweise kann nur die Signalerfassungselektronik 13 innerhalb und die Auswerteeinheit 14 ausserhalb der Rahmenkonstruktion 10 angeordnet sein. Es kommt zu verringertem Übersprechen oder anderen störenden Einflüssen auf die Messsignale während der kurzen Leitungsstrecke zur Signalerfassungselektronik 13 und/oder der Auswerteeinheit 14.

Durch die Zusammenfassung der aus dem Sensormodul 1 herausgeleiteten Signale mittels Ausgangsleitung 15, wird die Installation vereinfacht und eine Vertauschung von Signalleitungen 12 verhindert.

Die hier dargestellte Rahmenkonstruktion 10 des Sensormoduls 1 umfasst ein erstes Rahmenteil 110, in welchem die jeweils ersten Sensoren (A, B) der ersten und zweiten Spurgruppe (I, II) befestigt sind, sowie ein zweites Rahmenteil 110', in welchem die jeweils zweiten Sensoren (C, D) der ersten und zweiten Spurgruppe (I, II) befestigt sind. Alternativ können auch jeweils die Sensoren (A, D) der ersten Spurgruppe (I) in einem ersten Rahmenteil 110 und die Sensoren (B, C) der zweiten Spurgruppe (II) in einem zweiten Rahmenteil 110'befestigt sein.

Die Rahmenteile 110, 110' können einfach vor Ort zusammengesteckt, verschweisst oder zusammengeschraubt werden. Es sind damit unlösbare oder lösbare Verbindungen vorgesehen. Entscheidend ist, das die Abstände und Versatze der Streifensensoren relativ zueinander definiert und unveränderbar sind.

Optional ist eine Verzahnungskonstruktion 11 angeordnet, wodurch die Befestigung der gesamten Rahmenkonstruktion 10 des Sensormoduls 1 in der Fahrbahnoberfläche verbessert ist.

Wie in Figur 3 erkennbar, können zwei Verzahnungskonstruktionen 11, 11' in Fahrtrichtung L und damit in Fahrtrichtung voneinander längsbeabstandet vorgesehen sein, welche den Einbau des Sensormoduls 1 in die Fahrbahnoberfläche stabilisieren. Überfährt ein Fahrzeug 3 das Sensormodul 1, so überquert es in Fahrtrichtung zuerst die erste Verzahnungskonstruktion 11, dann die mehrteilige Rahmenkonstruktion 10 mit den Streifensensoren A, B, C, D und überquert dann die zweite Verzahnungskonstruktion 11', bevor es auf der Fahrbahn 2 weiter rollt. Durch die Ausgestaltung der in die Fahrbahnoberfläche hineinragenden Verzahnungskonstruktionen 11, 11' ist das Sensormodul 1 in der Fahrbahnoberfläche 2 stabilisiert gelagert und kann ausreichend gut mit dem Fahrbahnbelag verbunden gelagert werden. Dabei liegt das Abschlussniveau des Sensormoduls 1 auf Höhe der Fahrbahnoberfläche und bildet eine ebene Oberfläche, sodass ein Fahrzeug 3 nahezu störungsfrei über das Sensormodul 1 fährt.

### Optionen:

Mit den beschriebenen Streifensensoranordnungen sind sehr kompakte Sensormodule 1 mit einer Modullänge LABCD kleiner als 80cm erreichbar.

Um auf eine externe Energiezufuhr zu den Streifensensoren zu verzichten, sind in letzter Zeit Bestrebungen durchgeführt worden, die Überfahrenergie auch zur Speisung der WIM-Systeme zu nutzen. In diesem Sensormodul 1 ist es möglich den piezoelektrischen Effekt bei der Überfahrung der zweiten Streifensensoren C, D der ersten Spurgruppe I und der zweiten Spurgruppe II zur Bereitstellung der Versorgungsenergie der ersten Streifensensoren A, B der beiden Spurgruppen I, II zu nutzen. Dann wird keine Druckbeaufschlagung der zweiten Streifensensoren C, D detektiert, sondern die Streifensensoren dienen der Energieversorgung. Wenn aus der Überfahrt eines Fahrzeuges 3 über die ersten Streifensensoren A, B eine ausreichende Bestimmung der Geschwindigkeiten erreicht wurde, ist eine zeitversetzte weitere Messung nicht zwingend nötig.

Sollte bei der Überfahrt der ersten Streifensensoren A, B keine exakte Achsgewichtsbestimmung möglich gewesen sein, dann werden die zweiten Streifensensoren C, D zur Messung freigeschaltet.

Auch die Messung der Radgeschwindigkeiten der einzelnen Spuren 33, 34 ist möglich, indem die Zeit zwischen dem Überfahren der ersten Streifensensoren A, B und der zweiten Streifensensoren C, D jeder Spur detektiert wird. Dann kann die Radgeschwindigkeit jedes einzelnen Fahrzeugrades beim Überfahren des Sensormoduls 1 ermittelt werden.

Die Sensorflächen S, S' und die jeweiligen Sensorflächenbreiten b der verschiedenen Streifensensoren A, B, C, D können wahlweise identisch oder voneinander abweichend gross gewählt werden. Für die Auswertung und die Berechnung der Gewichte sind diese Grössen zu berücksichtigen.

Die erfindungsgemässe Vorrichtung umfasst in ihrer Grundausstattung vier Streifensensoren (A, B, C, D). In einer besonderen Ausgestaltung kann ein erweitertes Sensormodul zusätzlich weitere Sensoren enthalten zur Verbesserung der Genauigkeit der Resultate, beispielsweise in weiteren Rahmenteilen 110' gemäss Fig. 2 und 3. Die Abstände dieser zusätzlichen Sensoren zu ihren Nachbaren in Längsrichtung sowie zueinander in Querrichtung sollen den genannten Gesetzmässigkeiten der anderen Sensorabstände entsprechen. Die Modullänge des erweiterten Sensormoduls verlängert sich entsprechend um jeweils höchstens 40 cm pro Sensorpaar, das sich in Querrichtung über die gesamte Fahrbahn 2 erstreckt.

Es ist aber ratsam, die gesamte Modullänge in Fahrtrichtung nicht länger auszugestalten als ein typischer Radabstand eines Fahrzeuges, das gemessen werden soll. Es können aber beispielsweise vier identische Rahmenteile 110 nacheinander angeordnet werden, wenn eher Minimalabstände in Längsrichtung vorgesehen sind.

### Bezugszeichenliste

1 Sensormodul
   10 Rahmenkonstruktion
      110 Rahmenteil
   I erste Spurgruppe
      A erster Sensor der ersten Spurgruppe
      D zweiter Sensor der ersten Spurgruppe
      LAD Längsversatz zwischen Sensoren der ersten Spurgruppe
   II zweite Spurgruppe
      B erster Sensor der zweiten Spurgruppe
      C zweiter Sensor der zweiten Spurgruppe
      LBC Längsversatz zwischen Sensoren der zweiten Spurgruppe
   L Fahrtrichtung
   Q Modulquerrichtung
   LAB Abstand zwischen ersten Sensoren
   LCD Abstand zwischen zweiten Sensoren
   LABCD Modullänge, die in Fahrtrichtung gemessen alle Sensoren A, B, C und D vollständig umfassen
   S, S' Sensorfläche
      b Sensorflächenbreite in Fahrtrichtung L
   11 Verzahnungskonstruktion
   12 Signalleitungen
   13 Signalerfassungselektronik
   14 Auswerteeinheit
   15 Ausgangsleitung
2 Fahrbahn
3 Fahrzeug
   30 Fahrzeugrad
      300 Radkontaktlänge
   31 erste Achse
   32 zweite Achse
   33 erste Spur
   34 zweite Spur

## Patentansprüche

1. Sensormodul (1) zur Messung der Achsgeschwindigkeiten und -gewichte von zweispurigen Fahrzeugen, welche mit in eine Fahrtrichtung (L) auf einer Fahrbahn mit zwei Fahrspuren (S, S') fahren, umfassend eine Mehrzahl von piezoelektrischen Streifensensoren (A, B, C, D),
wobei alle Streifensensoren (A, B, C, D) orthogonal zur Fahrtrichtung angeordnet sind, wobei erste Streifensensoren (A, D) zueinander in Fahrtrichtung (L) des Sensormoduls (1) durch einen festen Längsversatz (LAD), der grösser als die maximale Radkontaktlänge (300) ist, voneinander beabstandet angeordnet sind und eine erste Spurgruppe (I) bilden,
zweite Streifensensoren (B, C) zueinander in Fahrtrichtung (L) des Sensormoduls (1) durch einen festen Längsversatz (LBC), der grösser als die maximale Radkontaktlänge (300) ist, voneinander beabstandet angeordnet sind und eine zweite Spurgruppe (II) bilden,
wobei die Streifensensoren (A, D) der ersten Spurgruppe (I) quer zur Fahrtrichtung (Q) versetzt zu den Streifensensoren (B, C) der zweiten Spurgruppe (II) angeordnet sind, sodass jede Spurgruppe (I, II) eine Spur der Fahrbahn abdeckt,
wobei die ersten Streifensensoren (A, B) jeder Spurgruppe (I, II) und die zweiten Streifensensoren (C, D) jeder Spurgruppe (I, II) in Fahrtrichtung (L) um einen Versatz (LAB resp. LCD) von zwischen 1 cm und 15 cm voneinander versetzt angeordnet sind und das Sensormodul 1 eine Modullänge (LABCD) von weniger als 80cm aufweist.

2. Sensormodul (1) gemäss Anspruch 1, **wobei** der Abstand (LAB) zwischen den ersten Streifensensoren (A, B) und der Abstand (LCD) zwischen den zweiten Streifensensoren (C, D) der unterschiedlichen Spurgruppen (I, II) in Fahrtrichtung (L) grösser als 1 cm und kleiner als 8 cm ist.

3. Sensormodul (1) gemäss Anspruch 1, **wobei** die Längsversatze (LAD, LBC) grösser als 20 cm sind.

4. Sensormodul (1) gemäss Anspruch 1, **wobei** die Streifensensoren der ersten Spurgruppe (I) derart relativ zu den Streifensensoren der zweiten Spurgruppe (II) angeordnet sind, dass alle Streifensensoren (A,B,C,D) in Fahrtrichtung (L) und Modulquerrichtung (Q) vollständig überlappungsfrei voneinander getrennt angeordnet sind.

5. Sensormodul (1) gemäss einem der vorhergehenden Ansprüche, **wobei** der Längsversatz (LAD) der ersten Spurgruppe (I) grösser als oder gleich wie der Längsversatz (LBC) der zweiten Spurgruppe (II) ist.

6. Sensormodul (1) gemäss einem der vorstehenden Ansprüche, **wobei** das Sensormodul (1) von einer Rahmenkonstruktion (10) gebildet ist, in welcher die Streifensensoren (A, B, C, D) der ersten Spurgruppe (I) und der zweiten Spurgruppe (II) mit festen Abständen relativ zueinander montiert sind.

7. Sensormodul (1) gemäss Anspruch 6, **wobei** die Rahmenkonstruktion (10) aus mindestens zwei Rahmenteilen (110, 110') gebildet ist, in welchen entweder die Sensoren (A, D) der ersten Spurgruppe (I) und der zweiten (B, C) Spurgruppe (I, II) getrennt befestigt sind, oder in welchen die jeweils ersten Sensoren (A, B) und zweiten Sensoren (C, D) getrennt befestigt sind.

8. Sensormodul (1) gemäss Anspruch 6 oder 7, **wobei** eine Signalerfassungselektronik (13) und/oder eine Auswerteeinheit (14) in der Rahmenkonstruktion (10) befestigt sind.

9. Sensormodul (1) gemäss einem der Ansprüche 6 bis 8, **wobei** eine Ausgangsleitung (15) aus der Rahmenkonstruktion (10) herausgeführt ist, welche Messsignale aller Sensoren (A,B,C,D) gebündelt weiterleitet.

10. Sensormodul (1) gemäss einem der vorhergehenden Ansprüche, **wobei** der erste Sensor (A) der ersten Spurgruppe (I) und der erste Sensor (B) der zweiten Spurgruppe (II) quer zur Fahrtrichtung (Q) auf Stoss zueinander angeordnet sind.

11. Sensormodul (1) gemäss einem der vorhergehenden Ansprüche, **wobei** zusätzlich weitere Sensoren angeordnet sind, zur Verbesserung der Genauigkeit der Resultate.

12. Verfahren zur dynamischen Gewichtsmessung von Fahrzeugen bei der Fahrt auf einer Fahrbahn,
wobei ein Sensormodul (1) umfassend eine Mehrzahl von Streifensensoren (A, B, C, D) verwendet wird, welche gemäss einem der vorhergehenden Ansprüche in einer Fahrbahn angeordnet sind,
mit den folgenden Schritten:
a) Zeitlich zueinander versetzte Aufnahme von Messsignalen des Sensormoduls an den Streifensensoren (A, B, C, D), zur Erreichung ungekoppelter Messsignale, und anschliessende
b) Berechnung der Achsgewichte des Fahrzeuges unter Verwendung mindestens je eines Integrals jeder Spurgruppe (I, II) der zeitlich aufgelösten Messsignalkurven und mindestens einer der ermittelten Geschwindigkeiten des Fahrzeuges zwischen den Streifensensorpaaren (AB, AC, AD, BC, BD, CD) bei der Fahrt.

13. Verfahren nach Anspruch 12, **wobei** die Messsignale abwechselnd von einem Streifensensor (A,D) der ersten Spurgruppe (I) und von einem Streifensensor (B, C) der zweiten Spurgruppe (II) erfasst werden.

14. Verfahren nach Anspruch 12, **wobei** die Messsignale von dem
ersten Streifensensor (A) der ersten Spurgruppe (I), von dem ersten Streifensensor (B) der zweiten Spurgruppe (II), von dem zweiten Streifensensor (C) der zweiten Spurgruppe (II) und abschliessend von dem zweiten Streifensensor (D) der ersten Spurgruppe (I) erfasst werden.

15. Verfahren nach Anspruch 12, **wobei** die Messsignale der
zweiten Streifensensoren (C, D) nur dann erfasst werden, wenn aus den Messsignalen der ersten Streifensensoren (A, B) keine korrekten Achsgewichte bestimmbar waren.

## Claims

1. Sensor module (1) for measuring the axle speeds and weights of two-track vehicles, which travel in a direction of travel (L) along a carriageway with two lanes (S, S'), comprising a plurality of piezoelectric strip sensors (A, B, C, D),
wherein
all the strip sensors (A, B, C, D) are arranged orthogonally to the direction of travel, wherein first strip sensors (A, D) are spaced from each other in the direction of travel (L) of the sensor module (1) via a fixed longitudinal offset (LAD) which is greater than the maximum wheel contact length (300), and form a first lane group (I),
second strip sensors (B, C) are spaced from each other in the direction of travel (L) of the sensor module (1) via a fixed longitudinal offset (LBC) which is greater than the maximum wheel contact length (300), and form a second lane group (II),
wherein strip sensors (A, D) of the first lane group (I) are arranged with an offset from strip sensors (B, C) of the second lane group (II) transversely to the direction of travel (Q), so that each lane group (I, II) covers one lane of the carriageway,
wherein the first strip sensors (A, B) of each lane group (I, II) and the second strip sensors (C, D) of each lane group (I, II) are arranged with an offset (LAB or LCD) between 1 cm and 15 cm relative to each other in the direction of travel (L), and sensor module 1 has a module length (LABCD) less than 80 cm.

2. Sensor module (1) according to claim 1, wherein the distance (LAB) between the first strip sensors (A, B) and the distance (LCD) between the second strip sensors (C, D) of the different lane groups (I, II) in the direction of travel (L) is greater than 1 cm and less than 8 cm.

3. Sensor module (1) according to claim 1, wherein the longitudinal offsets (LAD, LBC) are greater than 20 cm.

4. Sensor module (1) according to claim 1, wherein the strip sensors of the first lane group (I) are arranged relative to the strip sensors of the second lane group (II) in such manner that all strip sensors (A, B, C, D) are arranged completely separately and with no overlap in the direction of travel (L) and in the module transverse direction (Q).

5. Sensor module (1) according to any one of the preceding claims, wherein the longitudinal offset (LAD) of the first lane group (I) is greater than or equal to the longitudinal offset (LBC) of the second lane group (II).

6. Sensor module (1) according to any one of the preceding claims, wherein the sensor module (1) is formed by a frame construction (10), in which the strip sensors (A, B, C, D) of the first lane group (I) and of the second lane group (II) are mounted with fixed intervals relative to each other.

7. Sensor module (1) according to claim 6, wherein the frame construction (10) comprises at least two frame sections (110, 110'), in which either the sensors (A, D) of the first lane group (I) and the second (B, C) lane group (I, II) are fastened separately, or in which each of the first sensors (A, B) and the second sensors (C, D) are mounted separately.

8. Sensor module (1) according to claim 6 or 7, wherein an electronic signal acquisition unit (13) and/or an evaluation unit (14) are secured in the frame structure (10).

9. Sensor module (1) according to any one of claims 6 to 8, wherein an output wire (15) is routed from the frame structure (10) and forwards bundled measurement signals from all the sensors (A, B, C, D).

10. Sensor module (1) according to any one of the preceding claims, wherein the first sensor (A) of the first lane group (I) and the first sensor (B) of the second lane group (II) are arranged edge to edge in a direction (Q) transverse to the direction of travel.

11. Sensor module (1) according to one of the preceding claims, wherein further sensors may be arranged additionally to improve the accuracy of the results.

12. Method for dynamically measuring the weight of vehicles travelling on a carriageway,
wherein a sensor module (1) comprising a plurality of strip sensors (A, B, C, D) is used, which are arranged in a lane according to any one of the preceding claims
with the following steps of:
a) time-staggered capture of measurement signals of the sensor module to the strip sensors (A, B, C, D), in order to achieve uncoupled measurement signals, and subsequent
b) calculation of the axle weights of the vehicle by using at least one integral for each lane group (I, II) of the time-resolved measurement signal curves and at least one of the determined speeds of the vehicle between the strip sensor pairs (AB, AC, AD, BC, BD, CD) while travelling.

13. Method according to claim 12, wherein the measurement signals are captured alternatingly by a strip sensor (A, D) of the first lane group (I) and by a strip sensor (B, C) of the second lane group (II).

14. Method according to claim 12, wherein the measurement signals are detected from the first strip sensor (A) of the first lane group (I), from the first strip sensor (B) of the second lane group (II), from the second strip sensor (C) of the second lane group (II) and finally from the second strip sensor (D) of the first lane group (I).

15. Method according to claim 12, wherein the measurement signals of the second strip sensors (C, D) are only captured if correct axle weights could not be determined from the measurement signals of the first strip sensors (A, B).

## Revendications

1. Module (1) de capteurs pour la mesure des vitesses d'essieux et des poids d'essieux de véhicules à deux voies roulant dans un sens de circulation (L) sur une voie de circulation à deux voies (S, S'), ledit module comprenant une pluralité de capteurs à bande piézoélectriques (A, B, C, D),
dans lequel tous les capteurs à bande (A, B, C, D) sont disposés orthogonalement par rapport au sens de circulation, des premiers capteurs à bande (A, D) étant espacés les uns des autres dans le sens de circulation (L) du module (1) de capteurs par un décalage longitudinal fixe (LAD) qui est plus grand que la longueur maximale du contact (300) des roues, et constituant un premier groupe de voie (I),
des deuxièmes capteurs à bande (B, C) étant espacés les uns des autres dans le sens de circulation (L) du module (1) de capteurs par un décalage longitudinal fixe (LBC) qui est plus grand que la longueur maximale du contact (300) des roues, et constituant un deuxième groupe de voie (II),
les capteurs à bande (A, D) du premier groupe de voie (I) étant disposés, dans un sens transversal (Q) par rapport au sens de circulation, de manière décalée par rapport aux capteurs à bande (B, C) du deuxième groupe de voie (II) de sorte que chaque groupe de voie (I, II) couvre une voie de la voie de circulation,
dans lequel les premiers capteurs à bande (A, B) de chaque groupe de voie (I, II) et les deuxièmes capteurs à bande (C, D) de chaque groupe de voie (I, II) sont décalés les uns des autres dans le sens de circulation (L) d'un décalage (LAB ou LCD) compris entre 1 cm et 15 cm, et le module 1 de capteurs présente une longueur de module (LABD) inférieure à 80 cm.

2. Module (1) de capteurs selon la revendication 1, **dans lequel** la distance (LAB) entre les premiers capteurs à bande (A, B) et la distance (LCD) entre les deuxièmes capteurs à bande (C, D) des différents groupes de voie (I, II) dans le sens de circulation (L), respectivement, est supérieure à 1 cm et inférieure à 8 cm.

3. Module (1) de capteurs selon la revendication 1, **dans lequel** les décalages longitudinaux (LAD, LBC) sont supérieurs à 20 cm.

4. Module (1) de capteurs selon la revendication 1, **dans lequel** les capteurs à bande du premier groupe de voie (I) sont disposés par rapport aux capteurs à bande du deuxième groupe de voie (II) de telle sorte que tous les capteurs à bande (A, B, C, D) sont agencés, dans le sens de circulation (L) et dans le sens transversal (Q) du module, séparément les uns des autres sans aucun chevauchement.

5. Module (1) de capteurs selon l'une quelconque des revendications précédentes, **dans lequel** le décalage longitudinal (LAD) du premier groupe de voie (I) est supérieur ou égal au décalage longitudinal (LBC) du deuxième groupe de voie (II).

6. Module (1) de capteurs selon l'une quelconque des revendications précédentes, **dans lequel** ledit module (1) de capteurs est formé d'une structure de cadre (10) dans laquelle les capteurs à bande (A, B, C, D) du premier groupe de voie (1) et du deuxième groupe de voie (II) sont montés à des distances fixes les uns par rapport aux autres.

7. Module (1) de capteurs selon la revendication 6, **dans lequel** la structure de cadre (10) est formée d'au moins deux parties de cadre (110, 110') dans lesquelles soit les capteurs (A, D) du premier groupe de voie (I) et du deuxième (B, C) groupe de voie (I, II) sont fixés séparément, soit les premiers capteurs (A, B) et les deuxièmes capteurs (C, D) sont respectivement fixés séparément.

8. Module (1) de capteurs selon la revendication 6 ou 7, **dans lequel** une électronique d'acquisition de signaux (13) et/ou une unité d'évaluation (14) sont fixées dans la structure de cadre (10).

9. Module (1) de capteurs selon l'une quelconque des revendications 6 à 8, **dans lequel** une ligne de sortie (15) qui transmet des signaux de mesure de tous les capteurs (A, B, C, D) de manière groupée, sort de la structure de cadre (10) .

10. Module (1) de capteurs selon l'une quelconque des revendications précédentes, **dans lequel** le premier capteur (A) du premier groupe de voie (I) et le premier capteur (B) du deuxième groupe de voie (II) sont disposés en butée l'un contre l'autre dans le sens transversal (Q) par rapport au sens de circulation.

11. Module (1) de capteurs selon l'une quelconque des revendications précédentes, **dans lequel** d'autres capteurs sont en outre disposés pour améliorer la précision des résultats.

12. Procédé de mesure dynamique du poids de véhicules qui se déplacent sur une voie de circulation,
dans lequel on utilise un module (1) de capteurs comprenant une pluralité de capteurs à bande (A, B, C, D), qui sont disposés dans une voie de circulation tel que défini à l'une quelconque des revendications précédentes,
ledit procédé comprenant les étapes suivantes:
a) l'enregistrement décalé dans le temps de signaux de mesure du module de capteurs sur les capteurs à bande (A, B, C, D) pour obtenir des signaux de mesure non couplés, et ensuite
b) le calcul des poids d'essieux du véhicule en utilisant au moins une intégrale de chaque groupe de voie (I, II) des courbes de signaux de mesure résolues dans le temps et au moins une des vitesses du véhicule déterminées entre les paires de capteurs à bande (AB, AC, AD, BC, BD, CD) pendant le déplacement.

13. Procédé selon la revendication 12, **dans lequel** les signaux de mesure sont acquis alternativement par un capteur à bande (A, D) du premier groupe de voie (I) et par un capteur à bande (B, C) du deuxième groupe de voie (II).

14. Procédé selon la revendication 12, **dans lequel** les signaux de mesure sont enregistrés par le premier capteur à bande (A) du premier groupe de voie (I), par le premier capteur à bande (B) du deuxième groupe de voie (II), par le deuxième capteur à bande (C) du deuxième groupe de voie (II) et finalement par le deuxième capteur à bande (D) du premier groupe de voie (I).

15. Procédé selon la revendication 12, **dans lequel** les signaux de mesure des deuxièmes capteurs à bande (C, D) ne sont enregistrés que si les signaux de mesure des premiers capteurs à bande (A, B) n'ont pas permis de déterminer des poids d'essieu corrects.
